Europäisches Patentamt

European Patent Office

Office européen des brevets

(11) Numéro de publication: **0 094 268**
**B1**

## (12) FASCICULE DE BREVET EUROPEEN

(45) Date de publication du fascicule du brevet:
16.07.86

(51) Int. Cl.⁴: **B 29 C 45/14**

(21) Numéro de dépôt: **83400738.7**

(22) Date de dépôt: **13.04.83**

(54) Procédé de fabrication par injection de pièces en matière plastique recouvertes de tissu ou d'un autre matériau d'habillage souple, et dispositif pour la mise en oeuvre de ce procédé.

(30) Priorité: **14.04.82 FR 8206431**

(43) Date de publication de la demande:
**16.11.83 Bulletin 83/46**

(45) Mention de la délivrance du brevet:
**16.07.86 Bulletin 86/29**

(84) Etats contractants désignés:
**DE GB IT**

(56) Documents cités:
**FR - A - 2 329 434**
**FR - A - 2 450 686**

(73) Titulaire: **SO-GE-MA-P Société Anonyme dite:,
71 Avenue E. Grasset, F-17000 La Rochelle (FR)**

(72) Inventeur: **Becquet, Roger, 62 rue des Tamaris,
F-17340 Chatelaillon (FR)**

(74) Mandataire: **Casalonga, Axel et al, BUREAU D.A.
CASALONGA OFFICE JOSSE & PETIT Morassistrasse 8,
D-8000 München 5 (DE)**

## Description

La présente invention se rapporte à un procédé de fabrication par injection de pièces en matière plastique recouvertes en partie de tissu, de film plastique ou d'un autre matériau d'habillage souple, ainsi qu'à un dispositif pour la mise en œuvre de ce procédé.

Un procédé connu dit de surinjection de fabrication de pièces en matière plastique recouvertes en partie d'un matériau d'habillage souple consiste à placer un flan de matériau d'habillage entre les deux parties mâle et femelle d'un moule d'injection, à fermer le moule en prinçant le bord du flan et à injecter la matière plastique à travers l'une des deux parties du moule sur le flan. Le flan qui, avant l'injection, recouvre entièrement l'empreinte se déforme sous la pression et la température de la matière plastique injectée en épousant la forme de l'empreinte et se marie avec la matière injectée.

Ce procédé connu de surinjection permet d'obtenir un article dont une face n'a pas l'aspect de la matière plastique, mais du tissu, film plastique ou autre matériau d'habillage utilisé.

Le moule d'injection étant divisé en deux parties dans le plan dans lequel l'article présente les plus grande dimensions (plan de joint), afin de permettre le démoulage de l'article, le flan de matériau d'habillage est pincé entre les deux pièces du moule dans le plan de joint de ce dernier. Pour cette raison, la pièce injectée est obligatoirement recouverte par le matériau d'habillage jusqu'au plan de joint du moule.

Ce procédé connu n'est donc pas utilisable lorsque la pièce en matière plastique ne doit pas être habillée jusqu'au plan de joint, soit pour des raisons esthétiques, soit par exemple dans le cas de pièces qui doivent être assemblées et dont le matériau d'habillage génerait l'opération d'assemblage.

La demande de brevet FR-A-2450686 propose, pour remédier à cet inconvénient, d'utiliser un moule en deux parties formant entre elles un plan de joint de démoulage, une première desdites parties, dont le matériau d'habillage doit épouser la forme de l'empreinte, étant divisée en deux sous-parties entre le fond de l'empreinte et le plan de joint de démoulage, de manière à former un plan de joint supplémentaire, de placer et pincer un flan de matériau d'habillage entre lesdites deux sous-parties, et d'injecter la matière plastique à travers la seconde partie de moule, contre le flan de matériau d'habillage, de manière que le flan épouse le forme de l'empreinte de la première partie de moule et se marie avec la matière injectée, la matière d'habillage ne recouvrant la pièce terminée que jusqu'au plan de joint supplémentaire.

Il subsiste un problème concernant la finition de la pièce sur le bord du matériau d'habillage. En effet, du fait qu'il est pincé entre les deux parties du moule, le matériau d'habillage dépasse le plan de joint et doit être recoupé sur le pourtour de la pièce. Dans le cas où le matériau d'habillage est épais, par exemple en cas d'utilisation d'un matériau d'habillage composite tel que tissu monté sur mousse, l'épaisseur de la mousse est apparente sur la pièce à la suite de la découpe du matériau d'habillage. Il est donc nécessaire, afin d'obtenir une finition propre, soit de prévoir des éléments de finition supplémentaires rapportés tels que des profilés, soit de procéder à un repliage du bord sur lui-même avec collage et agrafage sur la pièce.

La présente invention a pour objet un procédé et un dispositif pour réaliser, par surinjection, des pièces en matière plastique revêtues d'un matériau d'habillage sur une partie de leur surface qui ne s'étend pas jusqu'au plan de joint du moule, et permettant une finition parfaite sur le bord du matériau d'habillage, sans apport d'éléments supplémentaires et sans repliage avec collage et agrafage.

Suivant le procédé conforme à l'invention, on décale le plan de joint supplémentaire légèrement vers le fond de l'empreinte par rapport au plan dans lequel doit s'arrêter la matière d'habillage sur la pièce injectée et on forme sur la pièce injectée, entre les deux plans de joint, une lèvre en saillie tournée vers le plan de joint supplémentaire, lèvre dont le bord libre se trouve dans le plan d'arrêt de l'habillage sur la pièce, et après démoulage de la pièce, on enfonce le bord de matériau d'habillage débordant de la pièce derrière ladite lèvre.

Le dispositif pour la mise en œuvre du procédé suivant l'invention comprend un moule d'injection divisé en deux parties par un plan de joint de démoulage coïncidant avec le plan dans lequel la pièce à mouler présente les plus grandes dimensions, la partie de moule opposée à la partie à travers laquelle se fait l'injection de la matière plastique étant divisée suivant un plan de joint supplémentaire correspondant sensiblement au plan dans lequel doit s'arrêter l'habillage sur la pièce, en deux sous-parties mobiles l'une par rapport à l'autre perpendiculairement audit plan, selon l'invention la sous-partie de moule située entre le plan de joint de démoulage et le plan de joint supplémentaire présente, entre lesdits deux plans, une gorge s'étendant depuis l'empreinte du moule en direction du plan de joint supplémentaire, en entourant à faible distance l'empreinte du moule, le fond de ladite gorge coïncidant avec le plan dans lequel doit s'arrêter l'habillage sur la pièce terminée.

En se référant au dessin annexé, on a décrire ci-après plus en détail un mode de réalisation illustratif et non limitatif de l'objet de l'invention; sur le dessin:

fig. 1 est une coupe d'un moule de surinjection conforme à l'invention, avant fermeture complète;

fig. 2 est une coupe du même moule de surinjection, après injection;

fig. 3 est une coupe du même moule de surinjection, après la première étape d'ouverture;

fig. 4 est une coupe du même moule de surinjection, après la seconde étape d'ouverture.

Le moule de surinjection tel qu'illustré par le dessin comprend une partie mâle 1 et une partie femelle 2 qui, lorsque le moule est fermé, délimitent de façon usuelle entre elles une cavité définissant la forme de la pièce à mouler. La partie mâle 1 comprend un évidement 3 servant à recevoir la buse d'injection de la presse à injecter et un canal d'alimentation 4 prolongeant l'évidement 3 pour déboucher en direction de la partie femelle de moule 2.

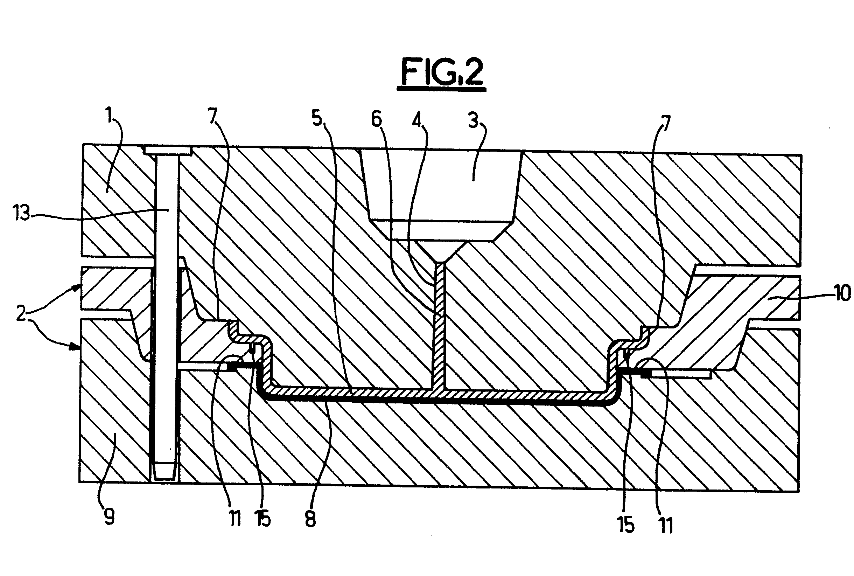

Comme le montre surtout la fig. 2 qui illustre le moule à l'état fermé, après injection, et montre la pièce 5 en matière plastique injectée dans la cavité avec la carotte 6 dans le canal 4, le plan de joint de démoulage 7 du moule entre les deux parties de moule 1 et 2 se trouve, de façon usuelle, dans le plan dans lequel la pièce 5 présente les plus grandes dimensions.

La partie de moule 2 est subdivisée en deux sous-parties 9 et 10 définissant entre elles un plan de joint supplémentaire 11 situé entre le fond 12 de l'empreinte de la partie femelle de moule 2 et le plan de joint de démoulage 7.

Les mêmes goujons de guidage 13 solidaires de la partie mâle de moule 1 assurent le guidage des deux sous-parties 9 et 10 de la partie femelle de moule 2.

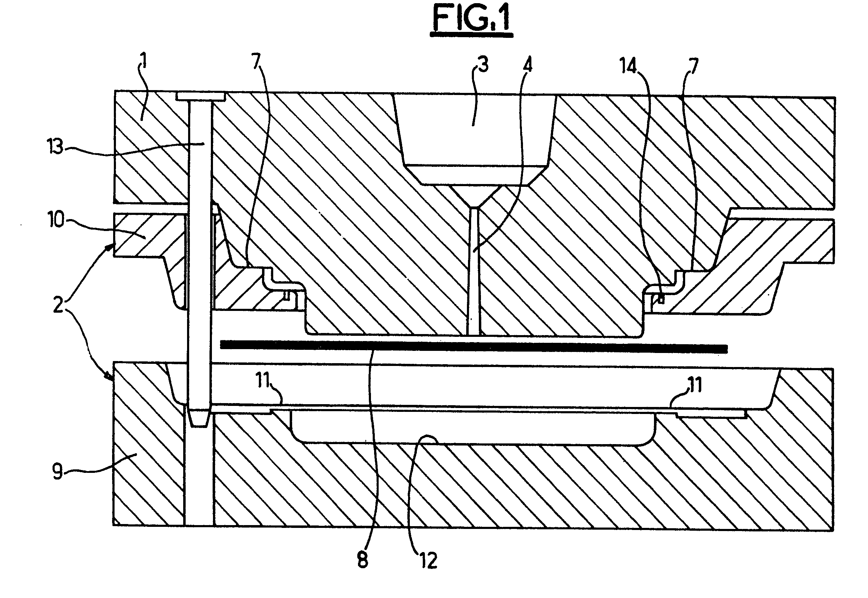

Pour la réalisation, par surinjection, à l'aide de l'outillage tel que décrit ci-dessus, d'une pièce de matière plastique 5 recouverte sur une partie seulement de sa surface d'un matériau d'habillage 8 tel que de tissu, un autre matériau souple en feuille ou un matériau composite qui s'arrête au niveau du plan de joint 11, c'est-à-dire en retrait vers le fond 12 de l'empreinte du moule par rapport au plan de joint de démoulage 7, on place un flan de matériau d'habillage 8 entre les deux sous-parties 9 et 10 de la partie femelle de moule 2, dans le plan de moule 11 ouvert, le plan de moule 7 étant fermé (fig. 1).

On ferme ensuite également le plan de moule 11 en pinçant le bord du flan de matériau d'habillage 8 dans ce plan, et on injecte la matière plastique par le canal de carotte 4 dans le moule, sur le flan de matériau d'habillage 8, de manière que la matière plastique applique le matériau d'habillage 8 contre le fond 12 de l'empreinte de la sous-partie de moule 9 et remplit toute la cavité de moule jusqu'au plan de joint 7 (fig. 2).

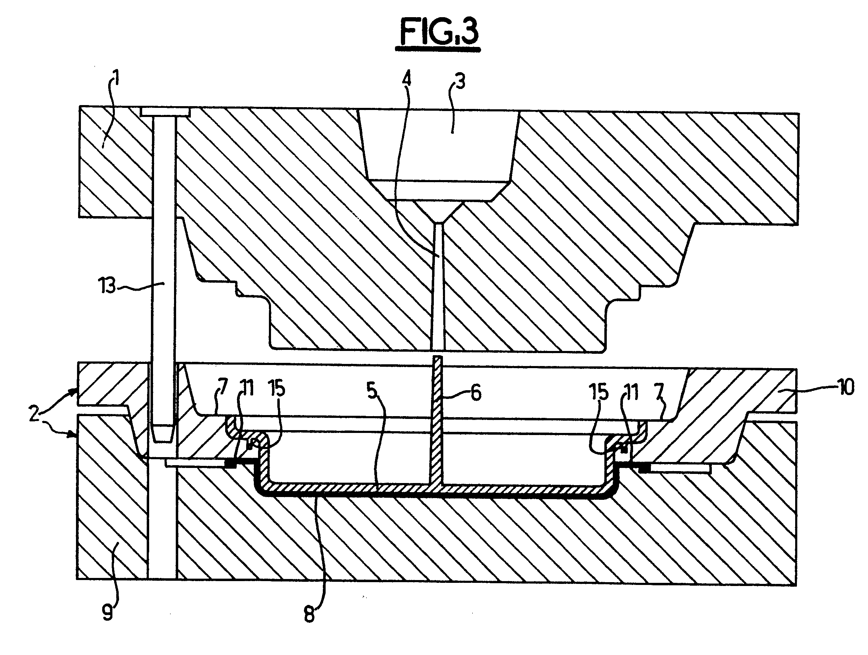

Après refroidissement, on ouvre le moule entre les deux parties de moule 1 et 2, c'est-à-dire au niveau du plan de joint 7, pour dégager la pièce 5, 8 du côté de la partie mâle de moule 1 (côté injection), la pièce restant retenue dans la partie femelle de moule 2 (fig. 3).

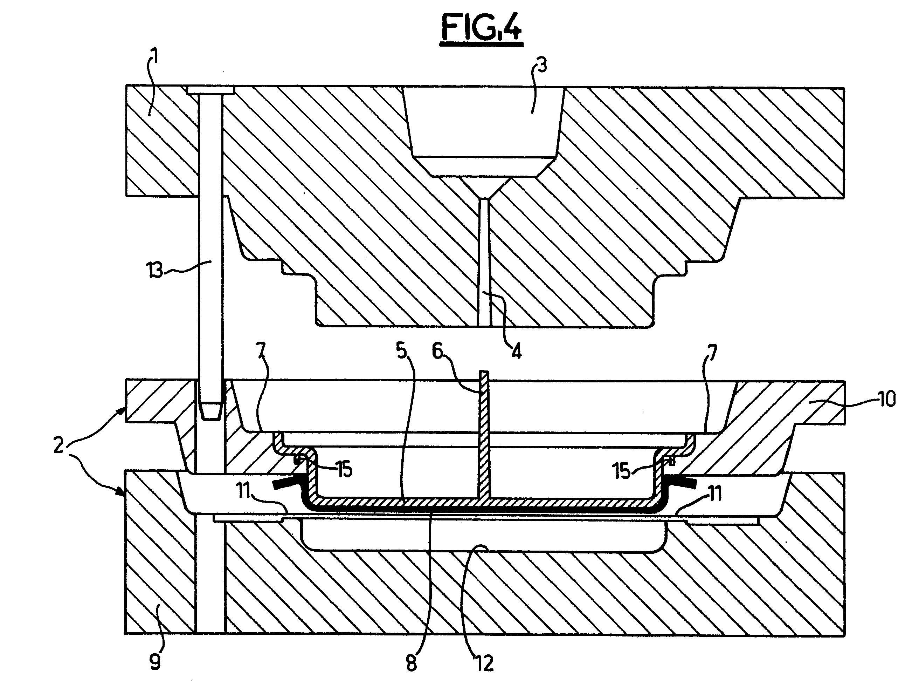

On ouvre ensuite la partie femelle de moule 2 au niveau du plan de joint 11, c'est-à-dire qu'on sépare les deux sous-parties de moule 9 et 10, pour dégager la pièce 5, 8 également du côté de la partie femelle de moule 2, l'ouverture du plan de joint 11 libérant le bord initialement pincé du flan de matériau d'habillage 8 (fig. 4). La pièce 5, 8 peut alors être retirée du moule vers le côté de la partie mâle de moule 1, c'est-à-dire vers le plan de joint 7.

Dans l'exemple représenté sur le dessin, la sous-partie de moule femelle 10 située entre les deux plans de joint 7 et 11 comporte, entre lesdits deux plans de joint, une gorge annulaire 14 s'étendant depuis la cavité de moule en direction du plan de joint 11, de manière à entourer à faible distance la partie correspondante de la cavité de moule, délimitée entre la sous-partie de moule femelle 10 et la partie de moule mâle 1 (voir fig. 1). Cette gorge 14 conduit à la formation, sur la pièce injectée 5, d'une lèvre 15 (voir fig. 2 à 4) située entre les deux plans correspondant aux plans de joints 7 et 11 en faisant saillie en direction du bord du flan d'habillage 8 qui déborde de la pièce 5 dans ce dernier plan 11. Le but de cette lèvre 15 est de recevoir, entre elle-même et la partie de la pièce 5 qu'elle entoure, le bord du matériau d'habillage 8 qui peut être inséré derrière la lèvre 15 de manière à procurer une finition parfaite au matériau d'habillage 8.

Il va de soi que le mode de réalisation décrit ci-dessus et représenté sur le dessin annexé n'a été donné qu'à titre d'exemple illustratif et non limitatif et que de nombreuses modifications et variantes sont possibles dans le cadre de l'invention.

Ainsi le procédé et le dispositif conformes sont applicables au moulage de pièces de formes très diverses devant être revêtues en partie seulement d'un matériau d'habillage destiné à modifier l'aspect des pièces, soit pour valoriser ces dernières en elles-mêmes, soit par exemple pour les assortir au décor du contexte dans lequel les pièces sont insérées.

Des exemples de telles applications se trouvent par exemple dans le secteur automobile (contre-portes, tableaux de bord, couvercles de boîte à gants, tablettes de lunette arrière, cache-tunnel de boîte de vitesses, habillage de coffre, par exemple pour les passages de roues), dans le secteur ameublement (habillage de sièges coques, dossiers d'assise, tabourets, façades de tiroirs, accoudoirs etc.), et dans de nombreux autres secteurs (boîtes, présentoirs, coffrets à bijoux, intérieur de valises et d'une matière générale, dans la réalisation par surinjection toutes pièces habillées jusqu'à présent de tissu par collage sur lesquelles la finition de fait à l'aide d'un profilé d'aluminium ou de matière plastique rapporté.

## Revendications

1. Procédé de fabrication par injection de pièces en matière plastique recouvertes en partie de tissu, de film plastique ou d'un autre matériau d'habillage souple, consistant à utiliser un moule en deux parties formant entre elles un plan de joint de démoulage, une première desdites parties, dont le matériau d'habillage doit épouser la forme de l'empreinte, étant divisée en deux sous-parties entre le fond de l'empreinte, et le plan de joint de démoulage, de manière à former un plan de joint supplémentaire, à placer et pincer un flan de matériau d'habillage entre lesdites deux sous-parties, et à injecter la matière plastique à travers la seconde partie de moule, contre le flan de matériau d'habillage, de manière que le flan épouse le forme de l'empreinte de la première partie de moule et se marie avec la matière injectée, la matière d'habillage ne recouvrant la pièce terminée que jusqu'au plan de joint supplémentaire, caractérisé par le fait qu'on décale le plan de joint supplémentaire légèrement vers le fond de l'empreinte par rapport au plan dans lequel doit s'arrêter la matière d'habillage sur la pièce injectée et on forme sur la pièce injectée, entre les deux plans de joint, une lèvre en saillie tournée vers le plan de joint supplémentaire, lèvre dont le bord libre se trouve dans le plan d'arrêt de l'habillage sur la pièce, et qu'après démoulage de la pièce, on enfonce le bord du matériau d'habillage débordant de la pièce derrière ladite lèvre.

2. Dispositif pour la mise en œuvre du procédé suivant la revendication 1, comprenant un moule d'injection divisé en deux parties par un plan de joint de démoulage coïncidant avec le plan dans lequel la pièce à mouler présente les plus grandes dimensions, la partie de moule opposée à la partie à travers laquelle se fait l'injection de la matière plastique étant divisée suivant un plan de joint supplémentaire correspondant sensiblement au plan dans lequel doit s'arrêter l'habillage sur la pièce, en deux sous-parties mobiles l'une par rapport à l'autre perpendiculairement audit plan, caractérisé par le fait que la sous-partie de moule (10) située entre le plan de joint de démoulage (7) et le plan de joint supplémentaire (11) présente, entre lesdits deux plans, une gorge (14) s'étendant depuis l'empreinte du moule en direction du plan de joint supplémentaire (11), en entourant à faible distance l'empreinte de moule, le fond de ladite gorge coïncidant avec le plan dans lequel doit s'arrêter l'habillage (18) sur la pièce (5) terminée.

## Claims

1. Process for the manufacture by injection moulding of articles made of plastic and partly covered with cloth, plastic film, or another supple cladding material, consisting in using a mould made of two parts which form between them a demoulding joint plane, the first one of the said parts, in which the cladding material is to be adapted to the shape of its mould cavity, being divided into two subsections between the bottom of the mould cavity and the demoulding joint plane, so as to form an additional joint plane, in placing and clamping a blank of cladding material between the said two subsections, and in injecting the plastic through the second part of the mould, against the blank of cladding material, so that the blank is adapted to the shape of the mould cavity of the first part of the mould and is coupled with the injected plastic, the cladding material covering the finished article only up to the additional joint plane, characterized in that the additional joint plane is offset slightly towards the bottom of the mould cavity relative to the plane in which the cladding material is to terminate on the injection-moulded article, and that there is formed, on the injection-moulded article, between the two joint planes, a lip projecting toward the additional joint plane, the free edge of said lip being situated in the plane in which the cladding on the article must end, and in that, after the article has been demoulded, the edge of the cladding material projecting from the article is inserted behind the said lip.

2. Device for carrying out the process according to claim 1, comprising an injection mould divided into two parts by a demoulding joint plane coinciding with the plane in which the article to be moulded has its greatest dimensions, the part of the mould facing the part through which the injection of the plastic is carried out being divided, along an additional joint plane corresponding substantially to the plane in which the cladding must end on the article, into two subsections movable relative to each other at right angle to the said plane, characterized in that the mould subsection (10) situated between the demoulding joint plane (7) and the additional joint plane (11) has, between the said two planes, a groove (14) extending from the mould cavity of the mould in the direction of the additional joint plane (11), and surrounding the mould cavity of the mould at a small distance, the bottom of the said groove coinciding with the plane in which the cladding (18) is to terminate on the finished article (5).

## Patentansprüche

1. Verfahren zur Spritzgussherstellung von Kunststoffteilen, teilweise überzogen mit Gewebe, Kunststoffolie oder einem anderen flexiblen Verkleidungsmaterial, gemäss welchem man eine Form aus zwei Teilen benützt, die zwischen sich eine Entformungstrennfuge bilden, wobei ein erster dieser Teile, an dessen Formhöhlung das Verkleidungsmaterial sich anschmiegen muss, zwischen dem Grund der Formhöhlung und der Entformungstrennfuge in zwei Sekundärteile unterteilt ist, so dass sich eine zusätzliche Trennfuge bildet, man einen Zuschnitt des Verkleidungsmaterials zwischen den beiden genannten Sekundärteilen einführt und einklemmt und man die Kunststoffmasse durch den zweiten Teil der Form hindurch gegen den Verkleidungsmaterialzuschnitt einspritzt, so dass der Zuschnitt sich der Formhöhlung des ersten Formteils anschmiegt und sich mit der eingespritzten Masse vereinigt, wobei das Verkleidungsmaterial das Fertigteil nur bis zur zusätzlichen Trennfuge bedeckt, dadurch gekennzeichnet, dass man die zusätzliche Trennfuge etwas in Richtung auf den Grund der Formhöhlung zu gegenüber der Ebene, bis zu der das Verkleidungsmaterial das Spritzteil bedecken soll, versetzt, und man auf dem Spritzteil zwischen den beiden Trennfugen eine in Richtung auf die zusätzliche Trennfuge zu vorspringende Lippe ausbildet, deren freier Rand sich in der Ebene befindet, bis zu der die Verkleidung auf dem Spritzteil reichen soll, und dass man nach der Entformung des Spritzteils den Rand des von dem Spritzteil abstehenden Verkleidungsmaterials hinter diese Lippe eindrückt.

2. Vorrichtung zur Durchführung des Verfahrens gemäss Anspruch 1, mit einer durch eine Entformungstrennfuge, die mit der Ebene zusammenfällt, in der das zu formende Teil seine grösste Ausdehnung hat, in zwei Teile unterteilten Spritzform, wobei der Teil der Form, welcher dem Teil, durch den der Kunststoff hindurchgespritzt wird, gegenüberliegt, durch eine zusätzliche Trennfuge unterteilt ist, die im wesentlichen mit der Ebene übereinstimmt, bis zu der das Teil durch Verkleidungsmaterial überzogen werden soll, in zwei Sekundärteile unterteilt ist, die gegeneinander rechtwinklig zur genannten Ebene beweglich sind, dadurch gekennzeichnet, dass der Sekundärteil (10) der Form, der zwischen den Ebenen der Entformungstrennfuge (7) und der zusätzlichen Trennfuge (11) liegt, zwischen den genannten zwei Ebenen eine umlaufende Nut (14) aufweist, die sich von der Höhlung der Form aus in Richtung auf die zusätzliche Trennfuge (11) erstreckt und in geringem Abstand die Höhlung der Form umgibt, wobei der Grund der genannten Nut mit der Ebene, bis zu der die Verkleidung (18) auf dem Fertigteil (5) reichen soll, zusammenfällt.

# FIG.1

# FIG.2

0094268

FIG.3

FIG.4